# FASCICULE DE BREVET EUROPEEN

(11) **EP 0 826 184 B1**
(45) Date de publication et mention de la délivrance du brevet: **01.03.2000**
(21) Numéro de dépôt: 96919865.4
(22) Date de dépôt: 03.05.1996
(51) Int. Cl.: G06F 17/60

(54) **RESEAU DE REPARTITION ET DE GESTION D'ORDRES DE TRANSPORTS**
NETZWERK ZUM VERTEILEN UND VERWALTEN VON TRANSPORTAUFTRÄGEN
TRANSPORT INSTRUCTION MANAGEMENT AND DISTRIBUTION NETWORK

(30) Priorité: 05.05.1995 FR 9505382
(43) Date de publication de la demande: 04.03.1998
(73) Titulaire: Auger, Lucien, 93310 Le Pré-Saint-Gervais (FR)
(72) Inventeur: Auger, Lucien, 93310 Le Pré-Saint-Gervais (FR)
(74) Mandataire: Kohn, Philippe
(86) Numéro de dépôt international: FR9600678
(87) Numéro de publication internationale: WO9635184

(56) Documents cités:
- EP-A- 0 209 392
- DE-A- 4 019 890
- GB-A- 2 202 664
- US-A- 4 799 156

## Description

L'invention concerne notamment un réseau pour la répartition et la gestion d'ordres émis par des clients utilisateurs et qui sont exécutés par des transporteurs.

L'exécution d'un ordre de transport, par exemple d'une course effectuée par un coursier, nécessite que le client utilisateur puisse transmettre son ordre de la manière la plus simple et la plus efficace possible à un prestataire de services qui a la charge de la bonne exécution de l'ordre reçu.

A cet effet, le prestataire de services doit disposer d'une flotte de transporteurs, par exemple de coursiers, avec lesquels il peut entrer en contact pour leur communiquer les données techniques relatives aux différentes courses à effectuer.

Ces données sont notamment relatives aux adresses et aux heures de prises en charge et de livraisons, ainsi qu'à la nature des colis ou des plis à transporter.

Outre ces opérations techniques classiques de gestion de chaque ordre reçu en vue de son exécution par l'un des transporteurs de la flotte, le prestataire de services doit également assurer la gestion financière des ordres en vue de leurs règlements par les clients et la gestion financière des membres de la flotte en vue du paiement à ses membres des ordres qu'ils ont exécutés.

Selon la pratique la plus courante, le prestataire de services reçoit les ordres à effectuer, par le réseau de télécommunications, par exemple par téléphone ou par télécopie, en provenance de clients utilisateurs.

Afin d'assurer le bon fonctionnement et une bonne gestion économique de son entreprise, et notamment d'éviter de futurs impayés, les clients utilisateurs doivent avoir été préalablement identifiés et enregistrés par le prestataire de services comme des clients autorisés à transmettre des ordres de transports.

La réception d'un premier ordre provenant d'un nouveau client n'entraîne donc pas immédiatement l'exécution de l'ordre dans la mesure où le prestataire de services souhaite vérifier l'identité et éventuellement la solvabilité, de ce nouveau client, ce délai étant nuisible à la satisfaction du besoin immédiat d'un nouveau client.

Lorsqu'un ordre de transport est reçu provenant d'un client autorisé et reconnu, le prestataire de services doit, en fonction des adresses et des délais de prises en charge ou d'enlèvements et de livraisons, déterminer lequel des membres de sa flotte de transporteurs est susceptible d'exécuter cet ordre avec l'efficacité et la précision souhaitées.

Selon la pratique courante, la répartition des ordres reçus par le prestataire de services s'effectue de manière "empirique" et repose, pour son efficacité, sur le savoir-faire du prestataire de services et sur la compétence et la probité des membres de la flotte avec lesquels le prestataire de services est généralement en communication par radio ou par téléphone.

En particulier, lorsque le prestataire de services est en communication avec un coursier, il ne dispose d'aucun moyen réel de contrôle de la localisation géographique de ce coursier au moment où il est en contact avec lui et il ne peut donc pas vérifier
"a priori" si le coursier sera en mesure d'effectuer l'enlèvement en temps et en heure.

Afin d'assurer la plus grande efficacité de ses services, le prestataire souhaite par ailleurs disposer de la plus grande flotte possible de transporteurs, par exemple de coursiers.

Il est donc souhaitable que le prestataire de services puisse faire appel au plus grand nombre possible de transporteurs tout en s'assurant de l'identité, personne physique ou morale, de chaque transporteur, de la nature et de la conformité de leur matériel de transport, et du respect par ces transporteurs des dispositions légales, notamment des dispositions relatives au droit du travail et au droit des transports.

Enfin, la gestion économique et financière, tant avec les clients utilisateurs qu'avec les différents transporteurs membres de la flotte, nécessite de pouvoir automatiser au maximum, notamment avec des moyens informatiques, les différentes opérations de vérifications, de facturations et de paiements.

Afin de résoudre certains de ces problèmes, il a déjà été proposé dans le document US-A-4.799.156 un réseau de répartition et de gestion d'ordres de transports émis par des clients utilisateurs et exécutés par des transporteurs, caractérisé en ce qu'il comporte une unité centrale de traitement reliée aux utilisateurs pour la réception d'ordres de transports à exécuter, la gestion des ordres reçus, et notamment la répartition de ces ordres vers des unités périphériques de traitement reliées à l'unité centrale.

Toutefois, la conception proposée dans ce document ne permet notamment pas au prestataire de services de transport de déterminer lequel des membres de sa flotte de transporteurs est susceptible d'exécuter cet ordre avec l'efficacité et la précision souhaitées car il ne propose aucun moyen de contrôle de la localisation géographique du transporteur, par exemple d'un coursier, susceptible d'effectuer l'enlèvement d'un colis en temps et en heure.

L'invention a pour but de proposer une conception d'un réseau de répartition et de gestion d'ordres de transports qui permet de résoudre les différents problèmes qui viennent d'être évoqués.

Dans ce but l'invention propose un réseau du type mentionné précédemment, caractérisé en ce que le réseau comporte différentes bornes réparties géographiquement dont chacune est reliée à l'unité centrale et/ou aux utilisateurs et dont chacune comporte une unité périphérique de traitement reliée à l'unité centrale qui lui transmet au moins un ordre de transport à exécuter correspondant à un lieu d'enlèvement du colis près de la borne, et dont chacune comporte :
- des moyens d'identifications des transporteurs agréés susceptibles d'exécuter les ordres ;
- des moyens d'échanges de données entre la borne et les transporteurs agréés ;
- des moyens d'affichage d'un ou plusieurs ordres de transports à exécuter ;
- des moyens d'impression et de délivrance à un transporteur agréé de bordereaux correspondant à des ordres de transports à exécuter par ce transporteur ;
ces moyens étant reliés à l'unité périphérique de traitement.

Selon d'autres caractéristiques de l'invention :
- les moyens d'identification comportent un dispositif de lecture et/ou d'écriture de données sur une carte d'identification à circuit(s) intégré(s) à contact, aussi appelée carte à "puce", détenue par chaque transporteur agréé ;
- la carte d'identification comporte des données relatives à l'identité du transporteur agréé détenteur de la carte et des données relatives à une quantité d'accès aux bornes et/ou à un nombre d'ordres que le transporteur est encore autorisé à exécuter en vertu d'un abonnement préalablement souscrit par le transporteur auprès de l'organisme gérant le réseau ;
- les moyens d'échanges de données comportent un clavier permettant à un transporteur agréé identifié de sélectionner au moins un des ordres à exécuter affichés sur la borne et de commander la délivrance d'un bordereau correspondant à cet ordre ;
- les moyens d'échanges de données permettent à un transporteur agréé de communiquer avec l'unité centrale de traitement, notamment pour émettre des messages en direction de l'unité centrale de traitement et/ou un client utilisateur ;
- les moyens d'affichage comportent un écran d'affichage des ordres de transports à exécuter, notamment dans l'ordre chronologique de réception des ordres par l'unité périphérique de traitement, avec notamment pour chaque ordre :
   - l'adresse et l'heure de la prise en charge ;
   - l'adresse et l'heure de la livraison ;
   - une indication de la nature du transport à effectuer, notamment d'une catégorie de dimensions et/ou de poids à laquelle appartient un colis à transporter ou d'un type de véhicule requis pour effectuer le transport;
- chaque bordereau correspondant à un ordre de transport à effectuer comporte au moins les informations suivantes :
   - l'identité du transporteur agréé qui exécute l'ordre de transport ;
   - l'identité du client utilisateur émetteur de l'ordre ;
   - l'adresse et l'heure de la prise en charge ;
   - l'adresse et l'heure de la livraison ;
   - une indication de la nature du transport à effectuer ;
   - une représentation codée de ces informations, notamment sous la forme d'un code à barres, en vue de faciliter leur traitement par l'organisme de gestion du réseau postérieurement à l'exécution de l'ordre par un transporteur ;
- la carte d'identification d'un transporteur agréé comporte des données relatives à la nature des transports qu'il est autorisé à effectuer ;
- l'unité périphérique de traitement sélectionne et affiche les ordres à exécuter correspondant à des transports que le transporteur agréé et identifié est autorisé à effectuer ;
- chaque borne comporte des moyens, visibles à distance, d'avertissement de l'existence d'au moins un ordre de transport à exécuter.

D'autres caractéristiques et avantages de l'invention apparaîtront à la lecture de la description détaillée qui suit pour la compréhension de laquelle on se reportera aux dessins annexés dans lesquels :
- La figure 1 est un schéma illustrant la conception d'un réseau conforme aux enseignements de l'invention ; et
- la figure 2 est une schéma illustrant la conception d'une borne appartenant au réseau de la figure 1.

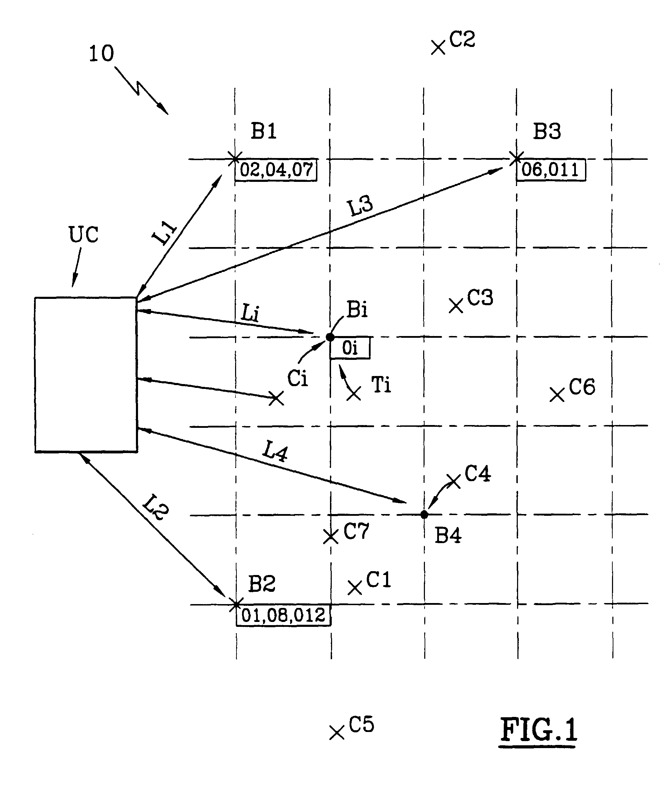

On a représenté sur la figure 1, en trait mixte, un maillage ou quadrillage 10 d'une zone géographique dans laquelle doivent être exécutés des opérations de transports.

Conformément aux enseignements de l'invention, les différents transports à effectuer sont gérés par un prestataire de services par l'intermédiaire d'un réseau constitué pour l'essentiel par une unité centrale de traitement UC et par des bornes Bi réparties géographiquement dans la zone du maillage 10, par exemple à des points particuliers d'intersection entre les différentes lignes verticales et horizontales (en considérant la figure 1) du maillage 10.

L'unité centrale UC est une unité de traitement informatique localisée chez le prestataire de services gestionnaire du réseau et qui est reliée en permanence aux bornes Bi, par exemple par des lignes Li de communication téléphonique.

L'unité centrale UC est ainsi en permanence susceptible d'échanger des données, dans les deux sens, avec les différentes bornes Bi.

L'unité centrale UC est susceptible de recevoir des ordres de transports à exécuter provenant de clients utilisateurs Ci qui peuvent communiquer directement avec l'unité centrale UC, par exemple par le réseau de communication téléphonique, ou directement avec l'une des bornes Bi, et notamment avec une borne située à proximité du lieu d'enlèvement ou de prise en charge d'un colis, d'un pli ou d'un objet à transporter.

Chaque client Ci peut appartenir à deux catégories principales de clients.

La première catégorie comprend des clients habitués qui sont identifiés par le prestataire de services qui dispose en mémoire, dans l'unité centrale, de toutes les données relatives à ces clients de la première catégorie et pour lesquels le prestataire de services effectue une opération de facturation en vue du règlement a posteriori des transports effectués pour le compte de ces clients.

Le client peut également appartenir à une deuxième catégorie de clients "inconnus" du prestataire de services et qui lui transmettent pour la première fois un ordre de transport à exécuter, cette deuxième catégorie regroupant également les clients qui n'ont pas suffisamment d'ordres à effectuer pour qu'il soit justifié de les traiter sous forme d'abonnés, c'est-à-dire comme des clients appartenant à la première catégorie.

Lorsqu'un client appartient à cette seconde catégorie, il peut accéder au réseau uniquement en transmettant son ordre à l'unité centrale UC qui analyse l'ordre et lui indique directement le prix du transport. Le client effectue alors immédiatement le règlement correspondant, par exemple par télépaiement, ce type d'opération étant aujourd'hui rendu particulièrement aisée grâce par exemple à l'utilisation d'un "Minitel" permettant d'effectuer une opération de télépaiement par utilisation d'une carte bancaire.

Quelle que soit la catégorie à laquelle appartient le client Ci, son ordre à exécuter comprend, de manière classique, des informations relatives à l'adresse de prise en charge du colis, à l'heure d'enlèvement du colis, à l'adresse de livraison ainsi qu'à l'heure souhaitée pour la livraison du colis.

Le client transmet également des informations relatives à la nature du colis à transporter, c'est-à-dire relative à ses dimensions, à son poids, et/ou des informations complémentaire dans le cas d'objets nécessitant des précautions particulières pour son transport.

Lorsqu'un ordre est reçu par l'unité centrale UC, les différents programmes et logiciels traitent les informations reçues du client et, après vérification, l'unité centrale transmet l'ordre à exécuter à celle des bornes Bi qui est située la plus près du lieu d'enlèvement du colis.

L'unité centrale UC reçoit également les ordres transmis par les clients abonnés à une borne de proximité.

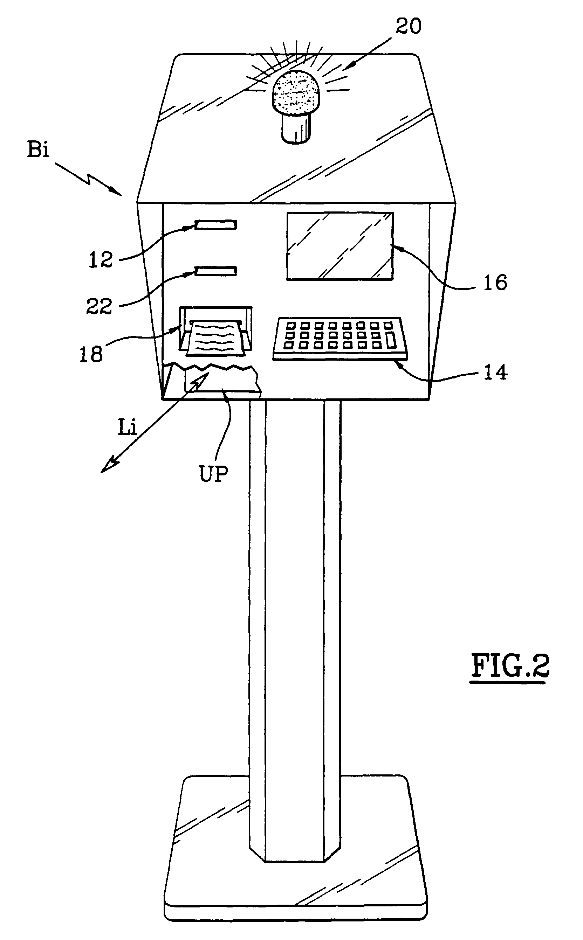

En se reportant à la figure 2, on décrira maintenant un exemple schématique de réalisation d'une borne Bi.

Chaque borne Bi comporte une unité périphérique de traitement UP qui est reliée en permanence, par une ligne Li, à l'unité centrale UC.

Chaque unité périphérique UP est également reliée au réseau de télécommunications afin qu'elle puisse recevoir directement des ordres de transports à exécuter provenant de clients abonnés appartenant à la première catégorie.

La borne Bi comporte des moyens de lecture et/ou d'écriture de données figurant sur une carte à circuit(s) intégré(s) à contact, ces moyens étant schématisés sous la forme d'une fente 12 d'introduction d'une telle carte dans un dispositif de lecture-écriture intégré à la borne et qui est relié à l'unité périphérique UP.

La borne Bi comporte un clavier 14, un écran d'affichage 16 et une imprimante 18, tous ces composants étant reliés à l'unité périphérique UP.

On a également représenté de manière schématique sur la figure 2, à la partie supérieure de la borne Bi, un avertisseur lumineux 20 visible à distance ainsi qu'une fente 22 pour l'introduction dans la borne d'une carte bancaire.

Le prestataire de services de transports gérant du réseau dispose d'une flotte de transporteurs Ti pour exécuter les ordres reçus des clients Ci.

Chaque transporteur Ti est, conformément aux enseignements de l'invention, un transporteur identifié et agréé pour accéder au réseau.

A cet effet, l'accès du transporteur au réseau se matérialise par la mise à sa disposition, par le prestataire de services, d'une carte à circuit(s) intégré(s) à contact (non représentée sur les figures) sur laquelle sont mémorisées différentes informations et données susceptibles d'être traitées par le réseau.

Ces informations sont d'abord relatives à l'identité du transporteur agréé.

En effet, la carte n'est délivrée au transporteur qu'après que celui-ci ait été agréé par le prestataire de services, ce dernier ayant notamment pu vérifier que le transporteur qui demande son adhésion au réseau remplit les différentes dispositions légales et fiscales relatives à son statut social, à ses assurances professionnelles, à la conformité de son véhicule, etc.

Lorsque les différentes conditions qui précèdent sont remplies, le transporteur Ti adhérent paie un droit d'accès au réseau en échange duquel la carte d'identification et d'accès lui est remise.

La carte d'identification et d'accès comporte en mémoire l'indication d'un nombre "n" d'ordres que le transporteur agréé sera ensuite autorisé à exécuter dans le réseau, son nombre d'ordres diminuant au fur et à mesure de l'utilisation de sa carte par le transporteur.

Il est également possible de prévoir que la carte mémorise un nombre d'accès à des bornes du réseau, chaque accès pouvant donner lieu, pour le transporteur agréé Ti, à la prise en charge d'un ou plusieurs ordres à exécuter à partir de la borne considérée.

La délivrance de la carte avec la mémorisation d'un nombre limité d'accès au réseau ou à des ordres est donc subordonnée au paiement préalable par le transporteur considéré du droit d'abonnement correspondant.

Lorsqu'une carte est épuisée, c'est-à-dire lorsqu'il ne figure plus en mémoire sur cette carte de droits d'accès à des ordres gérés par le réseau, le transporteur doit acheter une nouvelle carte auprès du prestataire de services ou il a par exemple la possibilité de "recharger" sa carte directement à partir d'une borne en introduisant celle-ci dans la fente 12, en introduisant une carte bancaire de paiement dans la fente 22, puis en procédant à une demande de transaction auprès de l'unité centrale UC par l'intermédiaire du clavier 14 qui est relié à l'unité périphérique UP qui est elle-même reliée à l'unité centrale UC. La recharge de la carte peut également être payée par "prélèvement" du montant correspondant sur le compte fournisseur du transporteur tenu par le gestionnaire du réseau.

L'écran 16 permet d'afficher différentes questions et commentaires relatifs à cette transaction.

En fonction de la nature du véhicule, ou des véhicules, dont dispose un transporteur agréé Ti, lui permettant seulement d'effectuer des transports appartenant à certaines catégories, la carte d'identification et d'abonnement de ce transporteur peut comporter des informations relatives à la nature des transports qu'il peut effectuer, informations qui seront, à chaque connexion avec une borne, traitées par le réseau pour limiter l'accès du transporteur uniquement à des ordres de transports qu'il sera techniquement en mesure d'effectuer.

On décrira maintenant le mode de fonctionnement du réseau et notamment le traitement complet d'un ordre de transport.

Les ordres de transports reçus par le réseau sont, comme cela a été mentionné précédemment, reçus directement par l'unité centrale UC ou par les bornes Bi.

Le traitement et la répartition géographique des ordres à exécuter par l'unité centrale UC aboutit à la transmission par les lignes Li d'ordres Oi répartis vers les différentes bornes Bi.

Ainsi, l'unité périphérique de traitement UP d'une borne Bi reçoit des ordres à exécuter Oi qu'elle mémorise et qu'elle peut afficher sur son écran 16 à la demande d'un transporteur agréé.

L'affichage s'effectue par exemple selon l'ordre chronologique de réception des ordres Oi par une borne Bi.

Comme on peut le voir sur la figure 1, la borne B2 a par exemple ainsi en mémoire des ordres O1, O8 et O12.

Lorsqu'une borne Bi a des ordres à exécuter en stock, l'avertisseur lumineux 20 est par exemple allumé pour indiquer à des transporteurs agréés qui sont à proximité de la borne Bi la présence de tels ordres à exécuter.

Le premier transporteur qui se présente devant la borne Bi introduit sa carte d'identification dans la fente 12.

Après reconnaissance de son identité par l'unité périphérique UP qui est reliée à l'unité centrale UC, le transporteur peut accéder, par l'intermédiaire de l'écran 16, à la liste des ordres à exécuter correspondant aux catégories de transports qu'il est autorisé à effectuer.

A partir de la liste affichée sur l'écran 16, et au moyen du clavier 14, le transporteur sélectionne un ou plusieurs ordres qu'il a décidé d'exécuter.

Pour chaque ordre sélectionné et validé par le transporteur, la borne Bi lui délivre, par l'intermédiaire de l'imprimante 18, un bordereau d'ordre de transport qui regroupe toutes les données techniques relatives aux transports qui ont été mentionnés précédemment ainsi qu'une codification, par exemple sous la forme d'un code à barres, de ces informations et données. Un bordereau distinct est imprimé et délivré pour chaque ordre sélectionné.

Lorsque les opérations de sélection des ordres et d'émission des bordereaux sont terminées, le transporteur retire sa carte d'identification dont le quota "n" a été réduit conformément au principe de gestion du réseau.

Le transporteur quitte la borne pour effectuer les ordres qu'il a sélectionné et pour chacun desquels il dispose d'un bordereau.

Chaque bordereau est émis et imprimé en plusieurs exemplaires, de préférence en quatre exemplaires.

D'une manière classique, pour chaque ordre, le transporteur prend livraison du colis ou de la marchandise à transporter à l'adresse d'enlèvement, chez le client qui a passé l'ordre ou chez un client d'enlèvement auquel il remet un premier exemplaire du bordereau en indiquant l'heure réelle de prise en charge, puis il effectue le transport et la livraison chez un client de livraison auquel il remet un deuxième exemplaire du bordereau après avoir indiqué l'heure réelle de livraison.

Une fois la course effectuée, le coursier conserve à sa disposition deux exemplaires du bordereau.

Un troisième exemplaire est destiné à être remis ou transmis, par courrier ou par des moyens de transmission de données, au prestataire de services gestionnaire du réseau afin que ce dernier lui paie ultérieurement les courses effectuées, le quatrième exemplaire du bordereau pouvant être conservé par le transporteur pour des vérifications comptables ultérieures.

A partir des bordereaux de transports qui lui ont été remis, le prestataire de services peut effectuer de manière automatique et informatisée, et de façon très simplifiée grâce à la lecture des codes à barres, le traitement comptable des différentes opérations en vue notamment d'obtenir les règlement par les clients et d'effectuer les paiements des différents membres de sa flotte de transporteurs.

Lorsqu'un client transmet directement son ordre à l'unité centrale UC, la gestion par cette dernière de son ordre, notamment en vue de la sélection de la borne la plus proche, ou d'une borne plus éloignée mais "moins chargée" en ordres s'effectue indépendamment de la connaissance de ce traitement par le client en vue de l'exécution la plus efficace de son ordre.

Lorsqu'un client transmet directement son ordre à une borne, dans le cas où par exemple le client C4 transmet son ordre à la borne B4 de la figure 1, l'unité centrale UC à laquelle est reliée l'unité périphérique de la borne B4, peut, après traitement et analyse, décider de répartir l'ordre vers une autre borne en fonction de la charge de la borne B4 ou en fonction de l'adresse réelle de prise en charge qui peut être située plus près d'une autre borne.

D'une manière générale, lorsqu'une borne est chargée en ordres à exécuter et que l'unité centrale détecte ce phénomène, le logiciel de gestion répartit à nouveau certains ordres vers d'autres bornes du réseau pour une prise en charge plus rapide des ordres par les transporteurs.

La conception du réseau permet également de traiter les ordres reçus pour lesquels les adresses de prise en charge sont trop éloignées d'une borne du réseau, l'unité centrale pouvant alors transmettre directement les ordres reçus à des transporteurs agréés localisés à proximité des adresses de prises en charge.

L'unité centrale assure également le contrôle du bon fonctionnement des bornes et notamment l'état des imprimantes et elle peut déclencher des opérations d'entretien visant notamment à recharger une borne en bordereaux vierges.

Les différents modes de liaison et de communication entre les bornes Bi et l'unité centrale UC ainsi qu'entre les clients et ces éléments, ne sont pas limités à ceux qui ont été décrits.

## Revendications

1. Réseau de répartition et de gestion d'ordres (Oi) de transports émis par des clients utilisateurs (Ci) et exécutés par des transporteurs (Ti), caractérisé en ce qu'il comporte une unité centrale (UC) de traitement reliée aux utilisateurs (Ci) pour la réception d'ordres (Oi) de transports à exécuter, la gestion des ordres reçus, et notamment la répartition de ces ordres vers des unités périphériques (UP) de traitement reliées à l'unité centrale, **caractérisé en ce que** le réseau comporte différentes bornes (Bi) réparties géographiquement dont chacune est reliée (Li) à l'unité centrale (UC) et/ou aux utilisateurs (Ci) et dont chacune comporte une unité périphérique (UP) de traitement reliée à l'unité centrale (UC) qui lui transmet au moins un ordre de transport à exécuter correspondant à un lieu d'enlèvement du colis près de la borne, et dont chacune comporte :
- des moyens d'identification des transporteurs agréés (Ti) susceptibles d'exécuter les ordres (Oi) ;
- des moyens (14) d'échanges de données entre la borne (Bi) et les transporteurs agréés (Ti) ;
- des moyens (16) d'affichage d'un ou plusieurs ordres (Oi) de transports à exécuter ;
- des moyens (18) d'impression et de délivrance à un transporteur agréé (Ti) de bordereaux correspondant à des ordres de transports à exécuter par ce transporteur ;
ces moyens (12, 14, 16, 18) étant reliés à l'unité périphérique de traitement (UP).

2. Réseau selon la revendication 1, caractérisé en ce que les moyens d'identification comportent un dispositif (12) de lecture et/ou d'écriture de données sur une carte d'identification à circuit(s) intégré(s) à contact détenue par chaque transporteur agréé (Ti).

3. Réseau selon la revendication 2, caractérisé en ce que la carte d'identification comporte des données relatives à l'identité du transporteur agréé (Ti) détenteur de la carte et des données relatives à une quantité d'accès aux bornes (Bi) et/ou à un nombre (n) d'ordres que le transporteur (Ti) est encore autorisé à exécuter en vertu d'un abonnement préalablement souscrit par le transporteur auprès de l'organisme gérant le réseau.

4. Réseau selon l'une quelconque des revendications précédentes, caractérisé en ce que les moyens d'échanges de données comportent un clavier (14) permettant à un transporteur agréé identifié, de sélectionner au moins un des ordres à exécuter affichés sur la borne (Bi) et de commander la délivrance d'un bordereau correspondant à cet ordre.

5. Réseau selon l'une quelconque des revendications précédentes, caractérisé en ce que les moyens d'échanges de données permettent à un transporteur agréé de communiquer avec l'unité centrale (UC) de traitement, notamment pour émettre des messages en direction de l'unité centrale de traitement et/ou un client utilisateur.

6. Réseau selon l'une quelconque des revendications précédentes, caractérisé en ce que les moyens d'affichage (16) comportent un écran d'affichage des ordres de transports à exécuter, notamment dans l'ordre chronologique de réception des ordres reçus par l'unité périphérique de traitement (UP), avec notamment pour chaque ordre:
- l'adresse et l'heure de la prise en charge ;
- l'adresse et l'heure de la livraison ;
- une indication de la nature du transport à effectuer, notamment d'une catégorie de dimensions et/ou de poids à laquelle appartient un colis à transporter ou d'un type de véhicule requis pour effectuer le transport.

7. Réseau selon l'une quelconque des revendications précédentes, caractérisé en ce que chaque bordereau correspondant à un ordre de transport à effectuer comporte au moins les informations suivantes :
- l'identité du transporteur agréé qui exécute l'ordre de transport ;
- l'identité du client utilisateur émetteur de l'ordre ;
- l'adresse et l'heure de la prise en charge ;
- l'adresse et l'heure de la livraison ;
- une indication de la nature du transport à effectuer ;
- une représentation codée de ces informations, notamment sous la forme d'un code à barres, en vue de faciliter leur traitement par l'organisme de gestion du réseau, postérieurement à l'exécution de l'ordre par le transporteur.

8. Réseau selon l'une des revendications 6 ou 7 prise en combinaison avec la revendication 2, caractérisé en ce que la carte d'identification d'un transporteur agréé comporte des données relatives à la nature des transports qu'il est autorisé à effectuer.

9. Réseau selon la revendication 8 prise en combinaison avec la revendication 6, caractérisé en ce que l'unité périphérique de traitement sélectionne et affiche des ordres à exécuter correspondant à des transports que le transporteur agréé et identifié est autorisé à effectuer.

10. Réseau selon l'une quelconques des revendications précédentes, caractérisé en ce que chaque borne (Bi) comporte des moyens (20), visibles à distance, d'avertissement de l'existence d'au moins un ordre de transport à exécuter à partir de cette borne.

## Patentansprüche

1. Netzwerk zum Verteilen und Verwalten von Transportaufträgen (Oi), die von verbrauchenden Kunden (Ci) gesandt werden und von Transportunternehmern (Ti) ausgeführt werden, wobei das Netzwerk eine Zentraleinheit (UC) umfasst, die zum Empfang von auszuführenden Transportaufträgen (Oi) , zur Verwaltung von der empfangenen Aufträgen und besonders zum Verteilen von diesen Aufträgen an periphere Verarbeitungseinheite (UP) mit den Verbrauchern (Ci) verbunden ist, wobei die Verarbeitungseinheite (UP) mit der Zentraleinheit (UC) verbunden sind, **dadurch gekennzeichnet** dass das Netzwerk verschiedene geopraphisch verteilte Säulen (Bi) umfasst, wobei jede Säule (Bi) mit der Zentraleinheit (UC) und/oder mit den Verbrauchern (Ci) verbunden (Li) ist und eine periphere Verarbeitungseinheit (UP) umfasst, die mit der Zentraleinheit (UC) verbunden ist, die dieser peripheren Verarbeitungseinheit (UP) wenigstens einen auszuführendenTransportauftrag (Oi) überleitet, der einer Abholungsort des Pakets in der Nähe der Säule entspricht, wobei jede Säule (Bi) :
- Identifizierungsmittel der zugelassenen Transportunternehmern (Ti), die imstande sind, die Transportaufträge (Oi) auszuführen ;
- Mittel (14) zum Datenaustausch zwischen der Säule (Bi) und den zugelassenen Transportunternehmern (Ti) ;
- Mittel (16) zum Anzeigen von einem oder mehreren auszuführendenTransportaufträgen (Oi) ;
- Mittel (18) zum Drucken und zum Ausgeben von Scheinen einem zugelassenen Transportunternehmer (Ti), die von diesem Transportunternehmer auszuführenden Transportaufträgen entsprechen ;
erfasst,
wobei diese Mittel (12, 14, 16, 18) mit der peripheren Verarbeitungseinheit (UP) verbunden sind.

2. Netzwerk nach Anspruch 1, dadurch gekennzeichnet dass die Identifizierungsmittel eine Anordnung (12) zum Lesen und/oder Schreiben von Daten auf einer mit einem integrierten Kontaktschaltkreis versehene Identifizierungskarte umfassen, die im Besitz jedes zugelassenen Transportunternehmer (Ti) ist.

3. Netzwerk nach Anspruch 2, dadurch gekennzeichnet dass die Identifizierungskarte die Identität des diese besitzenden zugelassenen Transportunternehmer (Ti) betreffende Daten und Daten enthält, die eine Menge von Zugängen an den Säulen (Bi) und/oder einen Zahl (n) von Transportaufträgen (Oi) betreffen, die der Transportunternehmer (Ti) kraft eines Abonnement noch auszuführen erlaubt ist, das vorher vom Transportunternehmer (Ti) mit einer das Netzwerk verwaltende Einrichtung ausgestellt wurde.

4. Netzwerk nach einem der vorhergehenden Ansprüchen, dadurch gekennzeichnet dass die Datenaustauschmittel eine Tastatur (14) umfassen, die einem identifizierten zugelassenen Transportunternehmer (Ti) erlaubt, wenigstens einen der auf der Säule (Bi).angezeigten auszuführenden Transportaufträgen auszuwählen und die Agbabe eines diesem Transportauftrag entspechenden Scheins zu bestellen.

5. Netzwerk nach einem der vorhergehenden Ansprüchen, dadurch gekennzeichnet dass die Datenaustauschmittel einem zugelassenen Transportunternehmer (Ti) erlauben, mit der Zentraleinheit (UC) im Dialog zu sein, insbesondere um Meldungen nach der Zentraleinheit (UC) und/oder den Verbraucher (Ci) zu senden.

6. Netzwerk nach einem der vorhergehenden Ansprüchen, dadurch gekennzeichnet dass die Anzeigemittel (16) einen Schirm umfassen, der die auszuführende Transportaufträge anzeigt, insbesondere in der chronologischen Abfolge der Empfänge der von der peripheren Verarbeitungseinheite (UP) empfangenen Transportaufträgen, insbesondere mit, für jeden Transportauftrag, :
- die Adresse und die Zeit des Aufnehmens ;
- die Adresse und die Zeit der Lieferung ;
- einen Hinweis über die Beschaffenheit des auszuführenden Transport, insbesondere einer Grössen- und/oder Gewichts-Kategorie des zutransportierenden Pakets oder eines Typs von für den Transport erforderlichen Fahzeug.

7. Netzwerk nach einem der vorhergehenden Ansprüchen, dadurch gekennzeichnet dass jeder einem Transportauftrag entsprechenden Schein mindestens die folgende Auskünfte enthält :
- die Identität des zugelassenen Transportunternehmers, der den Transportauftrag ausführt ;
- die Identität des Verbrauchers, der den Transportauftrag gesandt hat ;
- die Adresse und die Zeit des Aufnehmen ;
- die Adresse und die Zeit der Lieferung ;
- einen Hinweis der Beschaffenheit des auszuführenden Transport ;
- eine codierte Darstellung dieser Auskünften, insbesondere als Strichcode, um ihre Verarbeitung durch die das Netzwerk verwaltende Einrichtung nach der Ausführung des Transportauftrags durch den Transportunternehmer (Ti) zu erleichtern.

8. Netzwerk nach einem der Ansprüchen 6 oder 7 im Zusammenhang mit Anspruch 2, dadurch gekennzeichnet dass die Identifizierungskarte eines zugelassenen Transportunternehmer Daten enthält, die die Beschaffenheit der Transporten betreffen, für die er zugelassen ist.

9. Netzwerk nach Anspruch 8 im Zusammenhang mit Anspruch 6, dadurch gekennzeichnet dass die periphere Verarbeitungseinheit auszuführende Transportaufträgen auswählt und anzeigt, die Transporte betreffen, für die der identifizierte zugelassene Transportunternehmer erlaubt ist, sie auszuführen.

10. Netzwerk nach einem der vorhergehenden Ansprüchen, dadurch gekennzeichnet dass jede Säule (Bi) von weiten sichtbare Mittel (20) umfasst, um über das Vorhandensein wenigstens eines auszuführenden Transportaufträgen zu benachrichtigen.

## Claims

1. Network for the distribution and the management of transport orders (Oi) sent out by user clients (Ci) and carried out by transporters (Ti) comprising a central processing unit (UC) connected with the users (Ci) for the reception of orders (Oi) to be carried out, the management of the received orders, and particularly the distribution of these orders towards peripheral processing units (UP) which are connected with the central unit, **characterized in that** the network comprises various geographically distributed terminals (Bi) which are each connected (Li) with the central unit (UC) and/or with the users (Ci) and each of which includes a peripheral processing unit (UP) connected with the central unit (UC) which sends it at least a transport order to be carried out which corresponds with the picking location of a parcel close to the terminal (Bi), and in that each terminal comprises :
- means for identifying the authorized transporters able to carry out the orders (Oi) ;
- means (14) for exchanging data between the terminal (Bi) and the authorized transporters (Ti) ;
- means (16) for displaying one or several orders (Oi) to be carried out ;
- means (18) for printing and issuing, to an authorized transporter (Ti), delivery slips corresponding with transport orders to be carried out by this transporter ;
these means (12, 14, 16, 18) being connected with the central processing unit (UP).

2. Network according to claim 1, characterized in that the identifying means comprises a device for reading and/or writing data on an integrated circuits identifying contact card retained by each authorized transporter (Ti).

3. Network according to claim 2, characterized in that the identifying claim contains data concerning the identity of the authorized transporter who retains the card, and data concerning an amount of allowed accesses to the terminal (Bi) and/or a number (n) of orders that the transporter (Ti) is still authorized to carry out by virtue of a subscription that the transporter has previously set up with the managing body of the network.

4. Network according to anyone of the preceding claims, characterized in that the data exchanging means comprises a keyboard (14) allowing an identified authorized transporter to select at least one of the orders to be executed which are listed on the terminal (Bi) and to ask for the issuance of a corresponding delivery slip.

5. Network according to anyone of the preceding claims, characterized in that the data exchanging means allow an authorized transporter to communicate with the central processing unit (UC), particularly for sending messages in direction of the central unit and/or of a client user.

6. Network according to anyone of the preceding claims, characterized in that the displaying means (16) comprises a screen for listing the transport orders to be carried out, particularly in the chronological order along which they were received by the processing peripheral unit (UP), each order containing :
- the address and the time of the picking ;
- the time and the address of the delivery ;
- an indication of the nature of the transport to be carried out, particularly of a category of sizes and/or weights to which belongs a parcel to be transported, or of the type of vehicle necessary for carrying out the transport.

7. Network according to anyone of the preceding claims, characterized in that each delivery slip corresponding with a transport order to be carried out includes at least the following information :
- the identity of the authorized transporter who will carry out the order ;
- the identity of the user client who has sent the order ;
- the address and the time of the picking ;
- the time and the address of the delivery ;
- an indication of the nature of the transport to be carried out ;
- an encoded description of these data, particularly in the form of a bar code, in order to facilitate their processing by the network managing body after the order has been carried out by the transporter.

8. Network according to one of claims 6 or 7 taken in combination with claim 2, characterized in that the identifying card of an authorized transporter contains data concerning the nature of the transports that he is authorized to carry out.

9. Network according to claim 8 taken in combination with claim 6, characterized in that the peripheral processing unit selects and lists the orders to be carried out corresponding with orders that the authorized and identified transporter is able to carry out.

10. Network according to anyone of the preceding claims, characterized in that each terminal (Bi) comprises means (20), visible at distance, for alerting that there is at least one order to be executed from this terminal.
